# EUROPÄISCHE PATENTSCHRIFT

(11) **EP 3 755 602 B1**
(45) Veröffentlichungstag und Bekanntmachung des Hinweises auf die Patenterteilung: **09.11.2022**
(21) Anmeldenummer: 19708787.7
(22) Anmeldetag: 19.02.2019
(51) Int. Cl.: B62D 1/181, B62D 1/189

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 23.02.2018 DE 102018202795
(43) Veröffentlichungstag der Anmeldung: 30.12.2020
(73) Patentinhaber: thyssenkrupp Presta AG, 9492 Eschen (LI); thyssenkrupp AG, 45143 Essen (DE)
(72) Erfinder: GALEHR, Robert, 9486 Schaanwald (LI); RAICH, Thomas, 6773 Vandans (AT)
(74) Vertreter: thyssenkrupp Intellectual Property GmbH
(86) Internationale Anmeldenummer: PCT/EP2019/054049
(87) Internationale Veröffentlichungsnummer: WO 2019/162253

(56) Entgegenhaltungen:
- EP-A2- 1 072 497
- WO-A1-2018/054815
- DE-A1-102011 083 190
- DE-A1-102017 206 551
- JP-U- H01 173 072
- US-A- 5 294 149
- US-A1- 2012 006 142

## Beschreibung

Die Erfindung betrifft eine Lenksäule für ein Kraftfahrzeug, umfassend eine Stelleinheit, die eine um eine Drehachse drehbare Lenkwelle aufnimmt, wobei die Stelleinheit mit einem lenkradseitigen ersten Endbereich an einer Halteeinheit mittels eines ersten motorischen Antriebs verschwenkbar angeordnet ist, wobei die Stelleinheit über einen Schwenkhebel mit der Halteeinheit gekoppelt ist, wobei der Schwenkhebel an der Stelleinheit und an der Halteeinheit verschwenkbar angelenkt ist.

Aus der DE 10 2004 020 048A1 ist eine derartige motorisch verstellbare Lenksäule bekannt, bei der einer Stelleinheit mittels eines angelenkten Schwenkhebels vertikal verschwenkbar ist. Wegen der starren Anlenkung der Stelleinheit ist ein aufwendiger Längenausgleich erforderlich, weil die Stelleinheit durch den Schwenkhebel nicht nur vertikal verschwenkt wird, sondern gleichzeitig um einen geringen Betrag in Axialrichtung verschoben wird. Die bekannte Lösung für den Längenausgleich hat den Nachteil, dass sie aufwendig ist und weiterhin Nachteile für die Eigenfrequenz und Steifigkeit der Lenksäule mit sich bringt.

Eine ähnlich aufgebaute Lenksäule ist aus der US 2012/0006142 A1 bekannt. Diese weist jedoch keinen Schwenkhebel auf.

Aufgabe der Erfindung ist es, eine motorisch verstellbare Lenksäule der eingangs genannten Art anzugeben, die einen vereinfachten Längenausgleich bereitstellt.

Die Lösung der gestellten Aufgabe ergibt sich aus den Merkmalen des Anspruchs 1. Vorteilhafte Ausgestaltungsformen sind in den Unteransprüchen beschrieben.

Die Stelleinheit ist über einen Schwenkhebel mit der Halteeinheit gekoppelt, wobei der Schwenkhebel an der Stelleinheit und an der Halteeinheit verschwenkbar angelenkt ist. Somit ist der Schwenkhebel verschwenkbar an der Stelleinheit angebracht und weiterhin ist der Schwenkhebel verschwenkbar an der Halteeinheit angebracht. Der Schwenkhebel ist weiters mit dem ersten motorischen Antrieb gekoppelt. Durch das Betreiben des motorischen Antriebs wird der Stellhebel verschwenkt, so dass das Verschwenken des Stellhebels zu einem Verschwenken der Stelleinheit relativ zur Halteeinheit führt.

Gemäß der Erfindung ist die Stelleinheit in ihrem dem ersten Endbereich entgegengesetzten zweiten Endbereich mit einem elastischen Bügelelement versehen, welches zur Befestigung am Fahrzeugchassis vorgesehen ist und durch elastische Verformung sowohl eine Verschwenkung der Stelleinheit um eine Schwenkachse als auch eine Verschiebung der Stelleinheit in Richtung der Drehachse (9) zulässt. Somit ermöglicht das Bügelelement eine Schwenkbewegung der Stelleinheit um die Schwenkachse und bietet gleichzeitig die Möglichkeit des Längenausgleichs. Unter der Schwenkachse ist im Sinne der Erfindung nicht eine körperliche Schwenkachse zu verstehen, sondern die Achse, um die die Stelleinheit herum verschwenkt wird. Somit stellt die Schwenkachse eine Achse im mathematischen Sinn dar und ist somit durch eine Gerade gebildet, um die die Stelleinheit verdrehbar ist. Des Weiteren erfüllt das erfindungsgemäße Bügelelement auch die Funktion der Anbindung der Stelleinheit an das Fahrzeugchassis.

Bevorzugt ist die Schwenkachse nicht als starre Achse ausgebildet, sondern als verlagerbare Momentanachse. Somit nimmt die Schwenkachse abhängig von der Verstellposition eine andere Position. Die Momentanachse ist die Achse, um die die Stelleinheit im Moment (Zeitpunkt, infinitesimal) als nur drehend angesehen und behandelt werden kann. Die Geschwindigkeit in der Momentanachse ist im betrachteten Augenblick null oder wäre es, wenn sich die Stelleinheit bis zum Momentanachse ausdehnen würde.

Gemäß einer bevorzugten Ausführungsform umfasst das Bügelelement ein Metallblech, vorzugsweise ist es aus einem Metallblech gebildet. Es kann vorgesehen sein, dass das Bügelelement aus einem Federstahl gebildet ist. Ein solches Material bietet die zur sicheren Anwendung der Stelleinheit an das Fahrzeugchassis nötigte Festigkeit und gleichzeitig die für den Erfindungszweck erforderliche Elastizität. Des Weiteren eignet sich das genannte Material besonders gut für eine weitere vorteilhafte Ausgestaltung der Erfindung, wonach das Bügelelement als Stanz-Biegeteil ausgestaltet ist.

In einer weiteren vorteilhaften Ausgestaltung der Erfindung weist das Bügelelement eine Dicke (Materialstärke) mit einem Wert zwischen 0,5mm und 3mm auf.

Das Bügelelement kann in einer vorteilhaften Ausführungsform derart ausgelegt sein, dass bei der Verschwenkung der Stelleinheit um die Schwenkachse von maximal 5° sowie einer gleichzeitigen Verschiebung der Stelleinheit in Richtung der Drehachse von maximal 5mm sich das Bügelelement elastisch verformt.

In weiterer vorteilhafter Ausgestaltung ist das Bügelelement mittels einem oder mehreren Befestigungselementen an der Stelleinheit befestigt. Dies ermöglicht eine kostengünstige Herstellung des Bügelelementes, beispielsweise als separates Stanz-Biegeteil, welches anschließend auf einfache Weise an der Stelleinheit befestigt wird. Als Befestigungselemente kommen vor allem Schrauben oder Niete infrage.

Die Erfindung umfasst aber auch andere Befestigungsarten wie Kleben, Klemmverbindungen, Formschluss oder Verbindungen durch Umklammern oder Verformen von Befestigungselementen, die entweder am Bügelelement selbst oder an der Stelleinheit ausgebildet sind. In einer alternativen vorteilhaften Ausführungsform ist das Bügelelement unlösbar mit der Stelleinheit verbunden. Diese Verbindungsart ist besonders belastbar.

In weiterer vorteilhafter Ausgestaltung der unlösbaren Verbindung ist vorgesehen, dass das Bügelelement mittels eines Fügeverfahrens an der Stelleinheit befestigt ist. Dies kann insbesondere durch Schweißen oder Löten erfolgen.

Eine weitere alternative vorteilhafte Ausführungsform sieht vor, dass das Bügelelement und die Stelleinheit als einstückiges integrales Bauteil ausgestaltet ist. Bei dieser Ausführungsform können sowohl Befestigungselemente als auch der Arbeitsschritt der Befestigung des Bügelelements an der Stelleinheit während der Fertigung der Lenksäule eingespart werden.

In einer vorteilhaften Weiterbildung weist das Bügelelement einen Biegeabschnitt auf, dessen unterer Endbereich mit der Stelleinheit verbunden ist und der an seiner Oberseite in einen abgewinkelten Befestigungsabschnitt zur Befestigung am Fahrzeugchassis übergeht.

Gemäß einer weiteren vorteilhaften Ausgestaltungsform weist das Bügelelement einen sich im Wesentlichen parallel zu einem gegenüber der Drehachse der Lenkwelle orthogonal angeordneten Ebene erstreckenden Biegeabschnitt auf, dessen unterer Endbereich mit der Stelleinheit verbunden und der an seiner Oberseite in einen abgewinkelten Befestigungsabschnitt zur Befestigung am Fahrzeugchassis übergeht. Infolge seiner geometrischen Ausrichtung kann sich der mit der Stelleinheit verbundene Biegeabschnitt bei einer Höhenverstellung der Lenksäule sowohl um eine horizontale Achse verschwenken als auch in Axialrichtung federnd nachgeben, um den gewünschten Längenausgleich zu gewährleisten. Der Befestigungsabschnitt ist um einen an die Bauform des Fahrzeugchassis angepassten Winkel abgewinkelt, damit er parallel zu dem dafür vorgesehenen Befestigungsbereich des Fahrzeugchassis ausgerichtet ist.

Mit Vorteil weist der Biegeabschnitt eine zentrale Ausnehmung auf, wodurch die "Federkonstante" des Biegeabschnitts verringert wird, um die insbesondere für den Längenausgleich erforderliche Verformung des Biegeabschnitts mit geringerem Kraftaufwand zu ermöglichen.

In einer vorteilhaften Weiterbildung kann das Bügelelement zumindest eine Verstrebung aufweisen. Durch eine solche Verstrebung kann die Steifigkeit des Bügelelements entsprechend den angestrebten Anforderungen angepasst werden. In weiterer vorteilhafter Ausgestaltung ist die zentrale Ausnehmung mit kreuzförmig angeordneten Verstrebungen versehen. Diese erschweren unerwünschte Verbiegungen des Biegeabschnitts in anderen als den vorgesehenen Richtungen.

Alternativ oder zusätzlich kann das Bügelelement Sicken aufweisen, die ebenfalls der Anpassung der Steifigkeit dienen können. Eine weitere vorteilhafte Ausgestaltung der Erfindung sieht vor, dass in der Stelleinheit ein Mantelrohr aufgenommen ist, welches mittels eines zweiten motorischen Antriebs gegenüber der Stelleinheit axial verschiebbar ist und welches die Lenkwelle drehbar lagert. Diese Maßnahme ermöglicht neben der Höhenverstellung des Lenkrads auch die Längsverstellung in Axialrichtung der Lenkwelle.

Ein Ausführungsbeispiel der Erfindung wird nachfolgend anhand der Zeichnungen näher erläutert. Die Figuren zeigen im Einzelnen:
- Figur 1:: eine perspektivische Ansicht einer erfindungsgemäßen Lenksäule schräg von hinten;
- Figur 2:: eine perspektivische Ansicht der erfindungsgemäßen Lenksäule schräg von vorn;
- Figur 3:: eine seitliche Draufsicht auf eine erfindungsgemäße Lenksäule, die vollständig nach oben ausgefahren ist;
- Figur 4:: die Lenksäule von Figur 3 in einer Mittelposition;
- Figur 5:: die Lenksäule von Figur 3 und 4 im vollständig nach unten ausgefahrenen Zustand;
- Figur 6:: eine Detailansicht eines vorderen Endabschnitts der Lenksäule mit erfindungsgemäßem Bügelelement in der Mittelposition und in gestrichelter Darstellung im vollständig nach oben ausgefahrenen Zustand;
- Figur 7:: eine Detaildarstellung des vorderen Endabschnitts der Lenksäule mit erfindungsgemäßem Bügelelement in der Mittelposition und in gestrichelter Darstellung in vollständig nach unten ausgefahrenem Zustand.

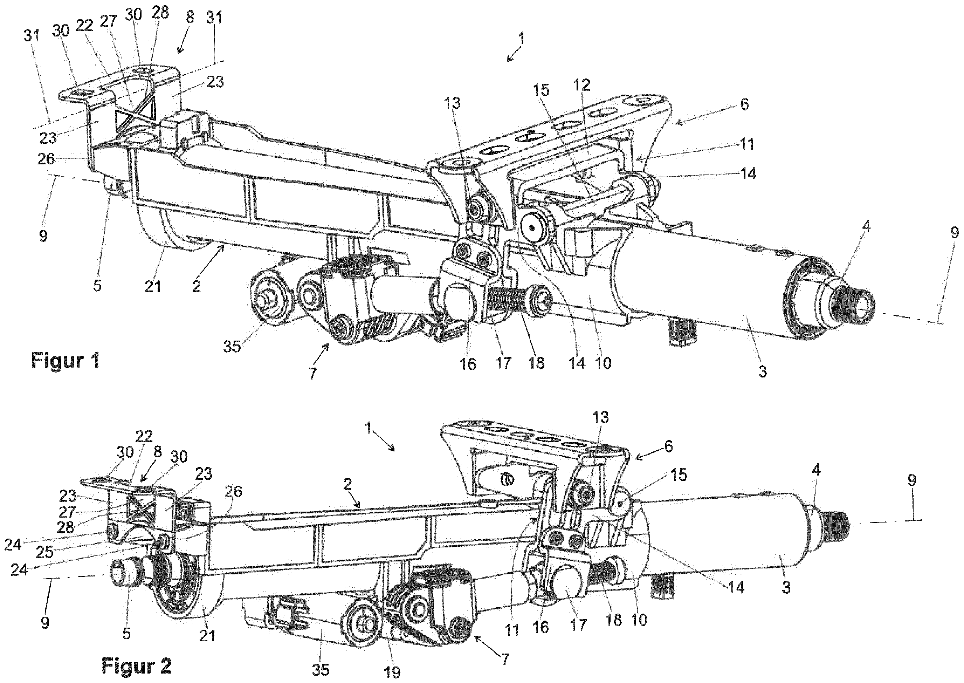

In den Figuren 1-5 erkennt man eine Lenksäule 1 für ein Kraftfahrzeug, die eine Stelleinheit 2, ein Mantelrohr 3 eine Lenkwelle, umfassend einen oberen, mit einem nicht gezeigten Lenkrad verbindbaren Lenkwellenteil 4, einen unteren Lenkwellenteil 5, eine am nicht gezeigten Fahrzeugchassis zu befestigende Halteeinheit 6, eine erste motorische Antriebseinheit 7 und ein Bügelelement 8 aufweist. Die Lenkwelle 4, 5 ist um eine Drehachse 9 drehbar.

Die Stelleinheit 2 ist mit ihrem im eingebauten Zustand dem nicht gezeigtem Lenkrad oder dem Fahrzeugheck zugewandten ersten Endbereich 10 an der Halteeinheit 6 angelenkt, die ihrerseits mit dem nicht gezeigten Fahrzeugchassis fest verbunden ist. Die Verbindung zwischen dem ersten Endbereich 10 der Stelleinheit 2 einerseits und der Halteeinheit 6 andererseits erfolgt durch eine komplexe Hebelvorrichtung 11, umfassend einen die Stelleinheit 2 von der Oberseite her U-förmig umgreifenden Brückenabschnitt 12, der über einen Bolzen 13 an der Halteeinheit 6 angelenkt ist und sowohl auf der rechten als auch auf der linken Seite der Stelleinheit 2 in zwei in Richtung des nicht gezeigten Lenkrades (nach hinten) ausgerichtete Schwenkhebel 14 übergeht, die ihrerseits mittels eines Bolzen 15 an der Stelleinheit 2 angelenkt sind. Des Weiteren besitzt die Hebelvorrichtung 11 auf der in Fahrtrichtung links liegenden Seite der Stelleinheit 2 einen gegenüber dem Schwenkhebel 14 abgewinkelten, sich nach unten erstreckenden Antriebshebel 16, der an eine mit einem Innengewinde versehenen Spindelmutter 17 angelenkt ist. Die Spindelmutter 17 sitzt auf einer mit einem Gewinde versehenen Spindel 18, auf der sich die Spindelmutter 17 relativ zur Stelleinheit 2 nach vorne oder nach hinten verschiebbar ist, wenn sich die Spindel 18 dreht. Die Spindel 18 wird durch einen ersten Elektromotor 19 über ein nicht gezeigtes Getriebe angetrieben.

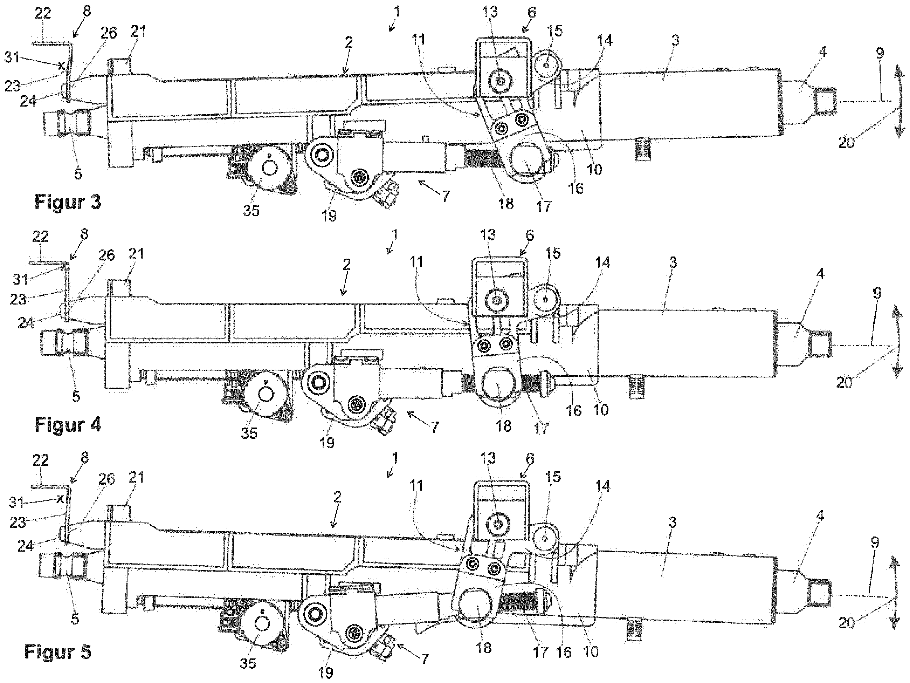

Um die Lenkwelle 4 und damit das nicht gezeigte Lenkrad in Schwenkrichtung 20 nach oben oder unten zu verstellen, wird der erste Elektromotor 19 in einer ersten Drehrichtung eingeschaltet, wodurch sich die Spindel 18 ebenfalls in einer ersten Drehrichtung dreht. Dabei wird die Spindelmutter 17 auf der Spindel 18 beispielsweise aus der in Figur 4 gezeigten Mittelposition gegen die Fahrtrichtung des Fahrzeugs nach hinten verschoben, bis die in Figur 3 gezeigte Position erreicht ist. Die Spindel 18 nimmt dabei den Antriebshebel 16 mit, wobei er sich in der Ansicht der Figuren 3-5 entgegen dem Uhrzeigersinn um die Achse des Bolzens 13 dreht und dabei den Schwenkhebel 14 mitnimmt, so dass sich auch der Schwenkhebel 14 entgegen dem Uhrzeigersinn dreht. Der Schwenkhebel 14 nimmt dabei über den Bolzen 15 den ersten Endbereich 10 der Stelleinheit 2 mit und drückt ihn nach oben, so dass die gesamte Stelleinheit 2 mit Mantelrohr 3 und Lenkwelle 4 in Schwenkrichtung 20 nach oben verschwenkt wird.

Wird der erste Elektromotor 19 in einer der ersten Drehrichtung entgegengesetzten zweiten Drehrichtung betrieben, so dreht sich die Spindel 18 ebenfalls in entgegengesetzter Richtung, wobei die Spindelmutter 17 in die in Figur 5 gezeigte in Fahrtrichtung vorne liegende Position fährt. Dabei wird der Antriebshebel 16 und damit die gesamte Hebelvorrichtung 11 im Uhrzeigersinn um die Achse des Bolzen 13 gedreht, was zu einer Absenkung des Endes des Schwenkhebels 14 und damit einer Absenkung der gesamten Stelleinheit 2 mit Mantelrohr 3 und Lenkwelle 4 führt, bis die in Figur 5 gezeigte vollständig nach unten gefahrene Position der Lenksäule 1 erreicht ist.

Ein zweiter Endbereich 21 der Stelleinheit 2 ist im Einbauzustand der Lenksäule 1 mittels eines erfindungsgemäßen Bügelelements 8 am nicht gezeigten Fahrzeugchassis befestigt. Das Bügelelement 8 ist aus einem Stahlblech gebildet und weist einen Befestigungsabschnitt 22 und einen Biegeabschnitt 23 auf. Der Biegeabschnitt 23 erstreckt sich parallel zu einer Ebene, wobei die Ebene gegenüber der Drehachse 9 im lastfreien Zustand des Bügelelements 8 orthogonal ausgerichtet ist. Der lastfreie Zustand ist jener Zustand, in dem das Bügelelement 8 verformungsfrei ist, also nicht elastisch verformt ist. Der Biegeabschnitt 23 erstreckt sich seitlich über die Breite der Stelleinheit 2 und ist in seinem unterem Endbereich 26 mit Durchgängen für Befestigungsschrauben 24 versehen, mittels derer das Bügelelement 8 an der Stelleinheit 2 verschraubt ist. Bevorzugt ist die Biegeabschnitt gleichbreit oder breiter als die Stelleinheit 8. Der untere Endbereich 26 ist außerdem in einem zwischen den beiden Durchgängen für Befestigungsschrauben 24 befindlichen Abschnitt mit einer kreissegmentförmigem Ausnehmung 25 versehen, um für die Bewegung nicht gezeigter, mit der Lenkwelle 5 verbundener Lenkwellenteile einen Freiraum zu schaffen, wie beispielsweise einem Universalgelenk. Des Weiteren ist der Biegeabschnitt 23 mit einer zentralen Ausnehmung 27 versehen, die zur Verringerung der Biegesteifigkeit des Biegeabschnitts 23 dient. Die Ausnehmung 27 erstreckt sich über eine Biegekante hinweg, wobei die Biegekante zwischen dem Biegeabschnitt 23 und dem Befestigungsabschnitt 22 ausgebildet. Innerhalb der zentralen Ausnehmung 27 ist eine kreuzförmige Verstrebung 28 angeordnet, welche eine Verbiegung des Biegeabschnitts 23 in andere als den gewünschten Richtungen erschweren soll.

Die kreuzförmige Verstrebung 28 umfassen einzelne Streben, die als Zugstäbe ausgebildet sind, wobei sich die einzelnen Streben in einem zentralen Punkt treffen und in diesem zusammenlaufen. Durch die kreuzförmige Verstrebung 28 ist die Steifigkeit der Lenksäule in Richtung der Schwenkachse 31 erhöht.

An seiner Oberseite geht der Biegeabschnitt 23 in einen abgewinkelten Befestigungsabschnitt 22 über, welcher mit seitlichen Durchbrüchen 30 zum Durchgang von Befestigungselemente versehen ist, mit denen der Befestigungsabschnitt 22 am nicht gezeigten Fahrzeugchassis verschraubt werden kann. Der Winkel zwischen Befestigungsabschnitt 22 und Biegeabschnitt 23 richtet sich nach den baulichen Gegebenheiten des Fahrzeugchassis, wobei die Fläche des Befestigungsabschnitts 22 im Wesentlichen parallel zur gegenüberliegenden Befestigungsfläche des Fahrzeugchassis ausgerichtet sein sollte. Der Winkel zwischen dem Befestigungsabschnitt 22 und dem Biegeabschnitt 23 weist bevorzugt einen Wert zwischen 75° und 110° auf.

Wenn sich bei Betätigung der Höhenverstellung der hintere Lenkwellenteil 4 und der erste Endbereich 10 der Stelleinheit 2 in Schwenkrichtung 20 verschwenkt, so erfolgt diese Schwenkbewegung um eine Schwenkachse 31, deren ungefähre Lage in Figur 1 eingezeichnet ist. Die Lage der Schwenkachse 31 verlagert sich während der Schwenkbewegung, dabei der Schwenkbewegung auch die Stelleinheit 2 zusammen mit dem Mantelrohr 3 und den Lenkwellenteilen 4, 5 in Richtung der Drehachse 9 axial nach vorne bzw. hinten verschoben wird. Die Schwenkachse kann somit in jeder Höhenverstellposition eine andere Lage aufweisen. Dies liegt daran, dass die Länge des Schwenkhebels 14, die dem Abstand der Rotationsachse des Bolzens 13 in der Rotationsachse des Bolzen 15 entspricht, je nach Drehwinkel des Schwenkhebels 14 gegenüber der Drehachse 9 unterschiedliche Positionen einnimmt. Mit anderen Worten liegt der Momentanpol, also der Schwenkpunkt, des Schwenkhebels 14 in der Rotationsachse des Bolzens 13 und fällt somit nicht mit der Schwenkachse 31 zusammen, so dass ein Längenausgleich vorzusehen ist, der dank des erfindungsgemäßen Bügelelements 8 einfach und kostengünstig bereitgestellt ist.

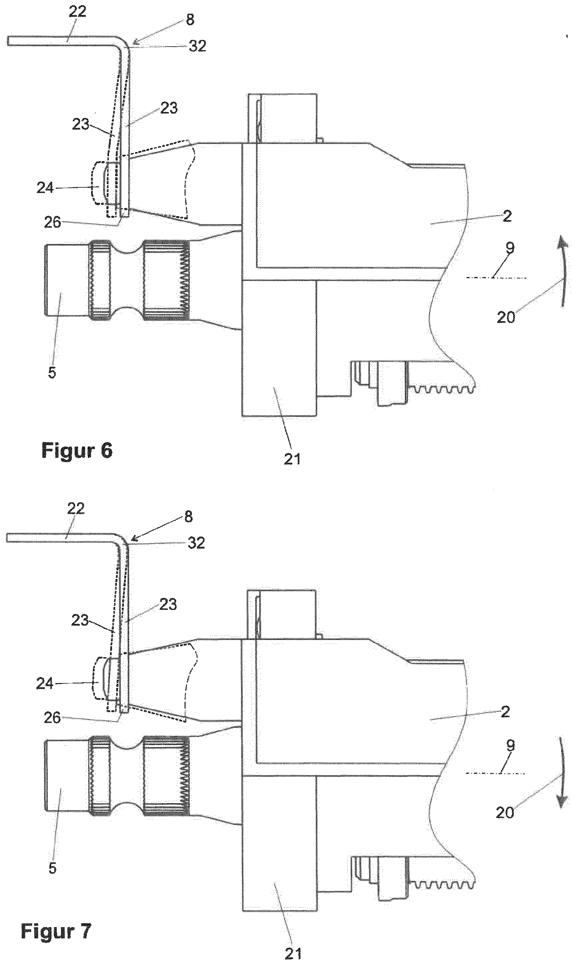

Beispielsweise liegt eine durch die Rotationsachsen der Bolzen 13 und 15 gezogene Linie bei der Darstellung von Figur 4 im Wesentlichen parallel zur Drehachse 9, wodurch sich die Stelleinheit 2 im Verhältnis zur Halteeinheit 6 in einer maximal in Richtung Lenkrad verschobenen Position befindet. Diese Position ist in den Detaildarstellungen der Figuren 6 und 7 in ihrer Auswirkung auf die Position des Biegeabschnitts 23 des Bügelelements 8 mit durchgezogenen Linien dargestellt. Fährt man die Höhenverstellung jedoch wie in Figur 6 gezeigt ganz nach oben, ist der Schwenkhebel 14 gegenüber der Drehachse 9 um einen deutlich sichtbaren Winkel entgegen dem Uhrzeigersinn verdreht. Damit verkürzt sich aber die in Richtung der Drehachse 9 wirksame Länge zwischen den Achsen der Bolzen 13 und 15, so dass die Stelleinheit 2 im Millimeterbereich nach links verschoben wird. Diese Situation ist in der vergrößerten Darstellung der Figur 6 gestrichelt dargestellt. Da der erste Endbereich 10 der Stelleinheit 2 in Schwenkrichtung 20 nach oben verstellt ist und gleichzeitig eine axialen Verschiebung parallel zur Drehachse 9 nach vorne (in Figur 6 nach links) erfolgt, verbiegt sich der Biegeabschnitt 23 an der Biegestelle 32 im Uhrzeigersinn, wobei der zweite Endbereich 26 ebenfalls nach vorne (nach links) hin verschoben wird. Gleichzeitig ist aber der erste Endbereich 10 der Stelleinheit 2 in Schwenkrichtung 20 nach oben verschwenkt, so dass der Biegeabschnitt 23 an einer zweiten Biegestelle 33 entgegen dem Uhrzeigersinn gebogen wird.

Anders sieht es aus, wenn die Höhenverstellung in Schwenkrichtung 20 ganz nach unten (Figuren 5, 7) verstellt wird. In diesem Fall wird der Schwenkhebel 14 im Uhrzeigersinn verschwenkt, wobei sich gegenüber der in Figur 4 gezeigten Mittelposition wiederum eine Verkürzung des Abstands zwischen den Achsen der Bolzen 13 und 15 ergibt. Dies hat zur Folge, dass die Stelleinheit 2 wiederum parallel zur Drehachse 9 nach vorne (in Figur 7 nach links) verschoben wird. Wie man an der gestrichelten Darstellung des Biegeabschnitts 23 erkennt, ist dieser jedoch im Wesentlichen nur an der ersten Biegestelle 30 im Uhrzeigersinn gebogen. Dies liegt daran, dass in der unteren Verstellposition der Höhenverstellung auch die Stelleinheit 2 im Uhrzeigersinn (in Schwenkrichtung 20 nach unten) verschwenkt ist.

Durch die erfindungsgemäße Ausgestaltung ermöglicht das Bügelelement 8 elastische Verformungen, die sowohl eine vertikale Verschwenkung als auch eine axiale Verschiebung der Stelleinheit 2 zulässt.

Das Bügelelement 8 ist bevorzugt als Stanz-Biegeteil ausgestaltet. Dies ermöglicht eine besonders kostengünstige Herstellung. In der vorliegenden Ausführungsform weist das Stahlblech des Bügelelements 8 eine Dicke von etwa 1 mm auf. Dabei erlaubt es eine Verschwenkung der Stelleinheit 2 bis zu 5° (+/- 2,5°) sowie eine axiale Verschiebung um bis zu 5 mm, ohne den elastischen Spannungszustand zu verlassen, so dass das Bügelelement 8 in einem lastfreien Zustand in seine ursprüngliche Gestalt zurückkehrt. Die Verformung ist somit reversibel.

In der vorliegenden Ausführungsform ist das Bügelelement 8 sowohl an der Stelleinheit 2 als auch am Fahrzeugchassis mittels Befestigungsschrauben befestigt. Statt der Befestigungsschrauben kommen aber auch andere Befestigungsarten wie Niete, Klemmverbindungen, Formschluss (Umklammerung), Verformung von Befestigungselementen und Verkleben infrage. Des Weiteren kann das Bügelelement 8 mit der Stelleinheit 2 auch unlösbar verbunden sein, beispielsweise durch Fügeverfahren wie Schweißen oder Löten oder indem das Bügelelement und die Stelleinheit als einstückiges integrales Bauteil ausgestaltet sind. Im letztgenannten Fall kann man die Befestigungselemente einsparen.

Neben der Höhenverstellung verfügt die gezeigte Lenksäule 1 auch über eine elektromotorische Längsverstellung. Diese ermöglicht die Verschiebung des Mantelrohrs 3 gegenüber der Stelleinheit 2 in Axialrichtung parallel zur Drehachse 9 der Lenkwelle 4, 5. Dabei ist das obere Lenkwellenteil 4 im Mantelrohr 3 mittels Wälzlagern drehbar gelagert, so dass es sich bei einer Verschiebung in Axialrichtung zusammen mit dem Mantelrohr 3 bewegt. Das untere Lenkwellenteil 5 ist mit dem oberen Lenkwellenteil 4 drehfest aber in Richtung der Drehachse 9 teleskopisch verschiebbar verbunden. Das untere Lenkwellenteil 5 ist mittels eines Wälzlagers 34 im zweiten Endbereich 21 der Stelleinheit 2 drehbar gelagert. Für die Längsverstellung in Richtung der Drehachse 9 ist ein elektromotorischer Antrieb vorgesehen, der einen zweiten Elektromotor 35 aufweist, welcher über ein nicht gezeigtes Getriebe und einen zweiten Spindeltrieb 36 das Mantelrohr 3 in Axialrichtung gegenüber der Stelleinheit 2 verschiebt.

Die erfindungsgemäße Lösung ermöglicht bei einer Lenksäule 1 mit motorischer Höhenverstellung auf einfache und kostengünstige Weise eine schwenkbare Befestigung der Stelleinheit 2 am Fahrzeugchassis bei gleichzeitigem Längenausgleich mittels des erfindungsgemäßen Bügelelements 8.

### BEZUGSZEICHENLISTE

- 1: Lenksäule
- 2: Stelleinheit
- 3: Mantelrohr
- 4: Lenkwellenteil
- 5: Lenkwellenteil
- 6: Halteeinheit
- 7: erste motorische Antriebseinheit
- 8: Bügelelement
- 9: Drehachse
- 10: erster Endbereich
- 11: Hebelvorrichtung
- 12: Brückenabschnitt
- 13: Bolzen
- 14: Schwenkhebel
- 15: Bolzen
- 16: Antriebshebel
- 17: Spindelmutter
- 18: Spindel
- 19: erster Elektromotor
- 20: Schwenkrichtung
- 21: zweiter Endbereich
- 22: Befestigungsabschnitt
- 23: Biegeabschnitt
- 24: Befestigungsschrauben
- 25: Ausnehmung
- 26: unterer Endbereich
- 27: zentrale Ausnehmung
- 28: kreuzförmige Verstrebung
- 29: Befestigungsabschnitt
- 30: Durchbrüche
- 31: Schwenkachse
- 32: erste Biegestelle
- 33: zweite Biegestelle
- 34: Wälzlager
- 35: zweiter Elektromotor
- 36: zweiter Spindelantrieb

## Patentansprüche

1. Lenksäule für ein Kraftfahrzeug, umfassend eine Stelleinheit (2), die eine um eine Drehachse (9) drehbare Lenkwelle (4 ,5) aufnimmt, wobei die Stelleinheit (2) mit einem lenkradseitigen ersten Endbereich (10) an einer Halteeinheit (6) mittels eines ersten motorischen Antriebs (7) verschwenkbar angeordnet ist, wobei die Stelleinheit (2) über einen Schwenkhebel (14) mit der Halteeinheit (6) gekoppelt ist, wobei der Schwenkhebel (14) an der Stelleinheit (2) und an der Halteeinheit (6) verschwenkbar angelenkt ist, **dadurch gekennzeichnet, dass** die Stelleinheit (2) in ihrem dem ersten Endbereich (10) entgegengesetzten zweiten Endbereich (21) mit einem elastischen Bügelelement (8) versehen ist, welches zur Befestigung am Fahrzeugchassis vorgesehen ist und durch elastische Verformung sowohl eine Verschwenkung der Stelleinheit (2) um eine Schwenkachse (31) als auch eine Verschiebung der Stelleinheit (2) in Richtung der Drehachse (9) zulässt.

2. Lenksäule nach Anspruch 1, **dadurch gekennzeichnet, dass** das Bügelelement (8) ein Metallblech umfasst.

3. Lenksäule nach einem der Ansprüche 1 bis 2, **dadurch gekennzeichnet, dass** das Bügelelement (8) mittels eines oder mehrerer Befestigungselemente (24) an der Stelleinheit (2) befestigt ist.

4. Lenksäule nach einem der Ansprüche 1 bis 2, **dadurch gekennzeichnet, dass** das Bügelelement (8) unlösbar mit der Stelleinheit (2) verbunden ist.

5. Lenksäule nach Anspruch 4, **dadurch gekennzeichnet, dass** das Bügelelement (8) mittels eines Fügeverfahrens an der Stelleinheit (2) befestigt ist.

6. Lenksäule nach Anspruch 4, **dadurch gekennzeichnet, dass** das Bügelelement (8) und die Stelleinheit (2) als einstückiges integrales Bauteil ausgestaltet ist.

7. Lenksäule nach einem der vorhergehenden Ansprüche, **dadurch gekennzeichnet, dass** das Bügelelement (8) einen Biegeabschnitt (23) aufweist, dessen unterer Endbereich (26) mit der Stelleinheit (2) verbunden ist und der an seiner Oberseite in einen abgewinkelten Befestigungsabschnitt (22) zur Befestigung am Fahrzeugchassis übergeht.

8. Lenksäule nach einem der vorhergehenden Ansprüche, **dadurch gekennzeichnet, dass** das Bügelelement (8) zumindest eine Verstrebung (28) aufweist.

9. Lenksäule nach einem der vorhergehenden Ansprüche, **dadurch gekennzeichnet, dass** das Bügelelement (8) als Stanz-Biegeteil ausgestaltet ist.

10. Lenksäule nach einem der vorhergehenden Ansprüche, **dadurch gekennzeichnet, dass** das Bügelelement (8) eine Dicke mit einem Wert zwischen 0,5mm und 3mm aufweist.

11. Lenksäule nach einem der vorhergehenden Ansprüche, **dadurch gekennzeichnet, dass** in der Stelleinheit (2) ein Mantelrohr (3) aufgenommen ist, welches mittels eines zweiten motorischen Antriebs (35, 36) gegenüber der Stelleinheit (2) axial verschiebbar ist und welches die Lenkwelle (4) drehbar lagert.

## Claims

1. A steering column for a motor vehicle, comprising an actuating unit (2) which receives a steering shaft (4, 5) that is rotatable about a rotation axis (9), wherein the actuating unit (2) by way of a first steering-wheel proximal end region (10) is disposed on a holding unit (6) so as to be pivotable by means of a first motorized drive (7), wherein the actuating unit (2) is coupled to the holding unit (6) by way of a pivot lever (14), wherein the pivot lever (14) is articulated so as to be pivotable on the actuating unit (2) and on the holding unit (6) **characterized in that** the actuating unit (2) in the second end region (21) thereof that is opposite the first end region (10) is provided with an elastic bracket element (8) which is provided for fastening to the vehicle chassis and on account of an elastic deformation permits pivoting of the actuating unit (2) about a pivot axis (31) as well as displacing the actuating unit (2) in the direction of the rotation axis (9).

2. The steering column as claimed in claim 1, **characterized in that** the bracket element (8) comprises sheet metal.

3. The steering column as claimed in one of claims 1 to 2, **characterized in that** the bracket element (8) is fastened to the actuating unit (2) by means of one or a plurality of fastening elements (24).

4. The steering column as claimed in one of claims 1 to 2, **characterized in that** the bracket element (8) is non-releasably connected to the actuating unit (2).

5. The steering column as claimed in claim 4, **characterized in that** the bracket element (8) is fastened to the actuating unit (2) by means of a joining method.

6. The steering column as claimed in claim 4, **characterized in that** the bracket element (8) and the actuating unit (2) are designed as a single-piece integral component.

7. The steering column as claimed in one of the preceding claims, **characterized in that** the bracket element (8) has a bending portion (23), wherein the lower end region (26) of the said bending portion (23) is connected to the actuating unit (2), and said bending portion (23), on the upper side thereof, transitions to an angled fastening portion (22) for fastening to the vehicle chassis.

8. The steering column as claimed in one of the preceding claims, **characterized in that** the bracket element (8) has at least one strut section (28).

9. The steering column as claimed in one of the preceding claims, **characterized in that** the bracket element (8) is designed as a stamped and bent component.

10. The steering column as claimed in one of the preceding claims, **characterized in that** the bracket element (8) has a thickness with a value between 0.5 mm and 3 mm.

11. The steering column as claimed in one of the preceding claims, **characterized in that** a casing tube (3) which by means of a second motorized drive (35, 36) is axially displaceable in relation to the actuating unit (2) and which mounts the steering shaft (4) so as to be rotatable is received in the actuating unit (2).

## Revendications

1. Colonne de direction pour un véhicule automobile, comprenant une unité de réglage (2) qui reçoit un arbre de direction (4, 5) rotatif autour d'un axe de rotation (9), l'unité de réglage (2) étant agencée de manière pivotante avec une première zone d'extrémité côté volant de direction (10) sur une unité de support (6) au moyen d'un premier entraînement motorisé (7), l'unité de réglage (2) étant couplée à l'unité de support (6) par l'intermédiaire d'un levier pivotant (14), le levier pivotant (14) étant articulé de manière pivotante sur l'unité de réglage (2) et sur l'unité de support (6), **caractérisée en ce que** l'unité de réglage (2) est pourvue, dans sa deuxième zone d'extrémité (21) opposée à la première zone d'extrémité (10), d'un élément en forme d'étrier élastique (8) qui est prévu pour la fixation au châssis du véhicule et qui permet, par déformation élastique, à la fois un pivotement de l'unité de réglage (2) autour d'un axe de pivotement (31) et un déplacement de l'unité de réglage (2) en direction de l'axe de rotation (9).

2. Colonne de direction selon la revendication 1, **caractérisée en ce que** l'élément en forme d'étrier (8) comprend une tôle métallique.

3. Colonne de direction selon l'une quelconque des revendications 1 à 2, **caractérisée en ce que** l'élément en forme d'étrier (8) est fixé à l'unité de réglage (2) au moyen d'un ou de plusieurs éléments de fixation (24).

4. Colonne de direction selon l'une quelconque des revendications 1 à 2, **caractérisée en ce que** l'élément en forme d'étrier (8) est relié de manière indissociable à l'unité de réglage (2).

5. Colonne de direction selon la revendication 4, **caractérisée en ce que** l'élément en forme d'étrier (8) est fixé à l'unité de réglage (2) au moyen d'un procédé de jointoiement.

6. Colonne de direction selon la revendication 4, **caractérisée en ce que** l'élément en forme d'étrier (8) et l'unité de réglage (2) sont conçus comme un composant intégral d'un seul tenant.

7. Colonne de direction selon l'une quelconque des revendications précédentes, **caractérisée en ce que** l'élément en forme d'étrier (8) présente une section de flexion (23) dont la zone d'extrémité inférieure (26) est reliée à l'unité de réglage (2) et qui se transforme sur son côté supérieur en une section de fixation coudée (22) pour la fixation au châssis du véhicule.

8. Colonne de direction selon l'une quelconque des revendications précédentes, **caractérisée en ce que** l'élément en forme d'étrier (8) présente au moins une entretoise (28).

9. Colonne de direction selon l'une quelconque des revendications précédentes, **caractérisée en ce que** l'élément en forme d'étrier (8) est conçu comme une pièce découpée et pliée.

10. Colonne de direction selon l'une quelconque des revendications précédentes, **caractérisée en ce que** l'élément en forme d'étrier (8) présente une épaisseur ayant une valeur comprise entre 0,5 mm et 3 mm.

11. Colonne de direction selon l'une quelconque des revendications précédentes, **caractérisée en ce qu'**un tube d'enveloppe (3) est reçu dans l'unité de réglage (2), qui peut être déplacé axialement par rapport à l'unité de réglage (2) au moyen d'un deuxième entraînement motorisé (35, 36) et qui supporte l'arbre de direction (4) de manière rotative.
